# EUROPEAN PATENT SPECIFICATION

(11) **EP 2 697 028 B1**
(45) Date of publication and mention of the grant of the patent: **10.06.2020**
(21) Application number: 11725959.8
(22) Date of filing: 13.04.2011
(51) Int. Cl.: B29C 44/58, B29C 33/04, B29C 33/10, B29C 33/46, B29C 33/56

(54) **PROCESS TO MOULD OBJECTS WITH A DUST MATERIAL**
VERFAHREN ZUM FORMEN VON GEGENSTÄNDEN MIT EINEM STAUBMATERIAL
PROCÉDÉ DE MOULAGE D'OBJETS AVEC UN MATÉRIAU EN POUDRE

(43) Date of publication of application: 19.02.2014
(73) Proprietor: Tryonic Limited, London SE10 8EX (IT)
(72) Inventor: DEL GUASTA, Andrea, I-31044 Montebelluna (TV) (IT); PARONETTO, Giuseppe, I-31044 Montebelluna (TV) (IT); ANTICHI, Andrea, I-31044 Montebelluna (TV) (IT)
(74) Representative: Citron, Massimiliano
(86) International application number: PCT/IB2011/051608
(87) International publication number: WO 2012/140474

(56) References cited:
- EP-A2- 1 149 677
- DE-A1- 19 754 180
- JP-A- S6 049 927
- JP-A- S59 127 737
- JP-A- S62 124 932
- JP-A- 2007 223 062
- US-A- 4 431 397
- US-A- 4 482 306
- US-A- 4 743 188
- US-A- 5 093 053
- US-A1- 2009 121 375
- US-A1- 2011 045 120
- US-B1- 6 291 026

## Description

The invention relates to a process for moulding objects in material in the form of powder, in particular for making padding or cushioning or shock absorber elements.

The high impact padding here discussed for example is usually made from expanded polystyrene (EPS), the disadvantages of which have stimulated the search for other improved materials.

The Applicant has recently invented a different material for such purpose, in the form of powder, which has an improved ability to absorb impact without structural collapse.

The basic formula of the material comprises minuscule plastic particles (microspheres).

EP 1 149 677 refers to a process for slush-molding, in particular for producing a dashboard made of two layers resting on a support element.

EP 1 149 677 solves the problem of taking the molded product out of the mold, and it does so by using an overpressure able to push out the molded product or mechanical ejecting elements.

DE 197 57 180 refers to a mould for producing composite objects made of granules.

US 4 431 397 A discloses a method according to the preamble of claim 1.

The object of the invention is to provide a reliable and versatile process for producing objects from powdered materials, in particular in the form of minuscule plastic particles (microspheres).

The process according to the invention, and the relative mould, is preferably applied to mould objects with the aforesaid powdered material, but may be extended in general to any material in powdered form for moulding.

The process is defined in claim 1.

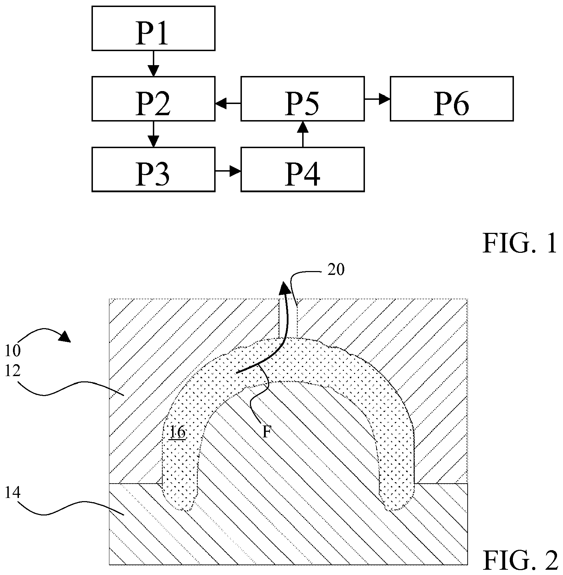

A production cycle can be schematised as in Fig. 1, wherein the steps P1,...., P5 are:
P1: loading of material in storage silo;
P2: insertion of material in the mould, e.g. by means of a peristaltic pump which takes it from the silo; (optional) electrostatic stabilisation, that is, dispersion of any residual electrostatic current; during extraction from the mould;
P3: heating of the mould to a temperature of 140-160°C, so that the material solidifies in the mould. Over such temperature there is a frequent risk of reduced performance;
P4: cooling of the mould, e.g. to 50-70°C;
P5: extraction from the mould;
P6: any finishing of the moulded object.

In step P1, it is preferable to keep the material agitated before being inserted in the mould to maintain its homogeneity.

To minimise the heating times in step P3 it is advisable to have a particularly conductive mould resistant to the heat stress generated by the production cycle. The mould should be of the minimum thickness possible, sufficiently thick to resist the pressure generated by the material during expansion and have the best heat conduction possible, so as to minimise the production cycles. For these reasons aluminium, for example, may be used.

Steps P3 and P4 are critical for industrialisation. The mould is heated and cooled to the required temperatures rapidly, to shorten the production cycle. Especially with the aforementioned thermoplastic materials, which swell if not cooled, the heating and cooling systems of the mould must be highly efficient, and produce fast heat variations. This a problem which is resolved by the process in claim 1 (e.g. coil external to the mould).

A circuit or coil with heating liquid and a temperature control panel is preferably used.

The ideal for maintaining the dimensions of the moulded object is a cooling in step P4 to room temperature. The object may, however, be extracted at an external temperature of the mould of 50- 70°C.

It is preferable for the cooling system to use diathermic oil or water, or even air.

The materials in powder to be moulded have the tendency to become compacted in the mould cavity, which is not perfectly filled. This causes moulding flaws or longer loading times.

The problem is resolved by the step defined in claim 1 (agitation of the mould). Even if the system becomes more complicated and it is unnecessary, the mould may also be agitated during heating.

Conventional moulds for polystyrene are perforated for the entrance and exit of steam. So that to extract the moulded object a jet of air at the end of the process is sufficient.

The process according to the invention however does not envisage a perforated mould (such as the known moulds which have a hole every 3-4 cm² and which are complicated to make) because otherwise the powdered material would be dispersed. An entrance does exist, but after the material has been inserted the same material insertion tube is used to close it, and in addition no steam is blown in.

The extraction problem is resolved as in claim 3, that is to extract the moulded object a pressurised fluid is injected into the mould from the outside through a duct which remains closed (e.g. by means of a valve) while the material is being inserted. The system may also comprise holes in the thickness of the mould with valves or means allowing the entrance only and not the exit of fluid (e.g. air) to obtain a unidirectional passage of fluid.

As said, a fluid or the mechanical action of pins, or extraction means which by moving project into the cavity of the mould and expel the piece, may be used.

To improve extraction a detaching agent may be used (such as silicone) but for a better result the cavity of the mould may be coated with PTFE (Teflon). This makes it possible not to leave residues on the surface of the moulded object which may thus be painted, glued and machined with all the known surface finishes (adhesive, decals + painting, water transfer + painting, covering with fabrics etc).

Alternatively, the surface of the mould cavity can be coated and the mould then filled. After firing the material is extracted from the mould already painted. Dedicated paints are available for such purpose, such as those used in body shop furnaces. Note that as an optional optimisation of the process, painting may also be performed after moulding.

All the problems of painting encountered when coating the surface of the moulded object with paint, the surface of which is often not perfectly smooth and/or absorbing humidity breaks up, are thus avoided. The degree of smoothness of the surface depends on the degree of finish of the mould.

The advantages of the invention will be clearer from the following description of a preferred embodiment of the process and the mould, with reference to the appended drawing wherein:
Fig.1 shows a block diagram of the process;
Fig. 2 shows a lateral cross-section of the mould according to the invention in a first step of the process;
Fig. 3 shows a lateral cross-section of the mould in fig.2 in a second step of the process;
Fig. 4 shows a lateral cross-section of the mould in fig.2 in a third step of the process.

Figure 2 shows a preferred mould 10 according to the invention to mould for example the inner padding of helmets. It has two shells 12, 14 which can be coupled to form a mould cavity 16.

An aperture 20 is made in the mould 10 in the upper part or top. From here the material can be inserted and also, according to the invention, the air can escape outwards, see arrows F. The aperture 20 does not need to be plugged during moulding: by leaving it open a visual indication of the degree of firing is also provided.

A surprising effect is that the gases which develop during moulding rise upwards, come out the aperture 20 and along the path vary the density of the material which is solidifying. The gases rarefy the material near the aperture 20, so that the moulded cap has a minimum density in this area. Since statistically it has been observed that in a helmet the hardest hit part most in need of protection is that above the skull, a protective cap is automatically provided which absorbs the destructive energy better in the point where impact generates it most.

According to the invention ad hoc gas vents are created, so as to locally control (that is lower) at will the density of the material in the moulded object. The gas which passes inside the mould through the powdered material can also be exploited without making it come out, or without making it come out immediately directly, it being sufficient for example to channel it towards some areas of the material to reduce the density. If the holes are not at the top of the mould, it can be fitted with plugs/filters suitable to block the powder but able to release the gas,

Should areas of different density in the moulded product be desired, dedicated localised insertion points of the powders may be made, that is to say, from such points different quantities of materials may be inserted with a different initial density to obtain a multi-density object or one with areas of different density.

One variation for controlling the density, which can be used alone or together with all the others described, is a method exploiting gravity. The material can be inserted in the mould from above, for example through a single aperture (which simplifies the structure of the mould). The material inserted first is that which ends up in the lowest part of the mould. By inserting materials of different densities in sequence, the density of the material with the mould filled can be determined. In practice, the density inside the mould can be stratified by the order in which the materials are introduced. To such purpose the mould may be equipped with measuring means with the function of inserting the desired quantity of material in controlled quantities and in sequence. For example, with a PLC which controls solenoid valves placed on feed ducts connected to different silos it is possible to mix and/or regulate the flows of various materials inside the mould according to a predefined program. By programming the PLC and the opening times of the solenoid valves the type of object to be moulded and its mechanical characteristics can be programmed. For more accurate dosing it is possible, for example, to connect the PLC to weight, proximity or flow volume sensors.

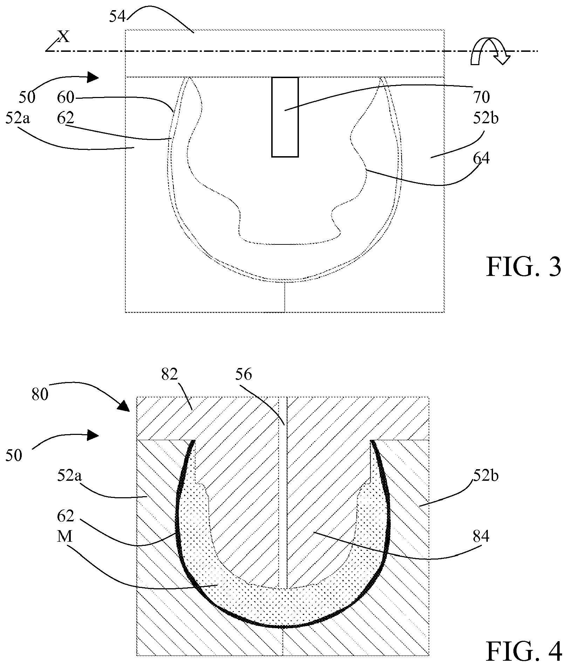

Fig. 3 shows another type of mould according to the invention. The mould 50 has a block composed of two or more half-shells 52a, 52b with a mould cavity 60 which communicates with the outside by means of a through aperture 56. Reference numeral 62 denotes an impregnated fabric or layer e.g. with two-stage epoxy resin, in other words that upon a first heating of the mould gels so as to achieve mechanical consistency sufficient to be able to adhere to the cavity 60 independently. The mould 50 is closed by a cover 54 which has an arm or plate 70 which extends inside the cavity 60. An inflatable element 64 is mounted on the plate /arm 70 or on the cover 54.

The moulding process occurs as follows. The layer 62 is placed inside the cavity 60, the aperture 56 is closed with the cover 54 and the arm 70 thus inserted in the cavity 60. The element 64 is then inflated so as to make the layer 62 adhere to the inner walls of the cavity 60, and then the mould 50 is heated to make the resin gel. The inflatable element 64 is then deflated and the cover 54 removed.

The plate 70 is then replaced with a counter mould 80 (fig. 4) which comprises a base 82 from which an element 84 extends having a corresponding geometry to the inside of the helmet (e.g. the anatomical cap usually in polystyrene).

The counter-mould 80 has in its base 82 a structure such as to permit contact of the closed mould with the impregnated fabric 62, so as to ensure an expansion of the material in the cavity 60 without spillage, leakage or splashes.

Material M is inserted in the cavity 60 through a duct made in the counter mould and an object is formed according to the steps P1-P6. Once the second step of heating has been completed a final monolithic product is obtained, in other words a single body comprising the layer of solidified resin and the solidified mould material, perfectly merged.

Note that in Fig. 3 the cover 54 may be rotatable around an axis X and present an arm 70 on one side and on the opposite side a surface for completing the cavity 60 or even the counter mould 80 described above.

The advantage of this process is to form a more resistant, higher performance finished product. It is possible to conjugate the external rigid cap and inner soft cap, essentially eliminating any creep, with the result of optimising the distribution of impact energy, and eliminating any empty spaces between the two caps with a consequent reduction of volume of the object.

The process which uses the mould in Fig. 3 can also use the technique described earlier of controlling the density of the material. This time the vent channels for the gases and/or controlled insertion of material are made in the counter-mould 80, in particular in the element 84 and in its support which extends from the base 82. For the rest the density is controlled as already said.

Note that in this case too, the density can be controlled by gravity, as explained earlier.

A material with which the processes described have proven very advantageous comprises for example a mixture of expanded particles (microspheres) and a binding agent. Its powder form makes it ideal for this application.

## Claims

1. Process for producing objects by inserting powdered material to heat and solidify in a mould (10; 50), with the steps
of heating and cooling the mould by means of circulation of fluid on the outer surface of the mould,
wherein the mould is agitated while being filled and/or heated, **characterized in that** the density of the material in the moulded object is controlled locally by controlling the output of the flows of gas released into the mould,
wherein said controlling is carried out by creating in the mould gas vents, so as to locally lower at will the density of the material in the moulded object.

2. Process according to claim 1, wherein said controlling the output is carried out by channelling the gas towards some areas of the material.

3. Process according to claim 1 or 2, wherein to extract the moulded object a pressurised fluid is injected from outside the mould through a duct (20) which remains closed during insertion of the material.

4. Process according to any one of the previous claims, wherein the density of the material in the moulded object is controlled locally by inserting quantities of materials with different densities in the mould before moulding.

5. Process according to claim 1, wherein quantities of materials with different densities are inserted in sequence in the mould through the same insertion point.

6. Process according to claim 5, wherein quantities of materials with different densities are inserted in sequence in the mould through two or more insertion points.

7. Process according to any of the previous claims, wherein before inserting the material, a resin-bearing layer (62) is placed inside the cavity (60), the layer is made to adhere to the inner walls of the cavity (60), and the mould (50) then heated to make the resin gel.

8. Process according to any one of the previous claims, wherein the moulded object is a padding or cushioning or shock absorber element.

9. Process according to any one of the previous claims, wherein the material is inserted in the mould by means of a peristaltic pump.

10. Process according to any one of the previous claims, wherein the material is in the form of minuscule plastic particles.

## Patentansprüche

1. Verfahren zur Herstellung von Gegenständen durch Einbringen von in einer Form (10; 50) zu erwärmendem und zu verfestigendem pulverförmigem Material mit den Schritten
Erwärmung und Abkühlung der Form durch Flüssigkeitsumlauf an der Außenfläche der Form, wobei
die Form während der Beschickung und/oder während der Erwärmung geschüttelt wird,
**dadurch gekennzeichnet**
die Dichte des Materials im geformten Gegenstand lokal geregelt wird, indem der Auslass von in die Form freigesetzten Gasströmen geregelt wird, wobei die besagte Regelung dadurch erreicht wird, dass Auslässe für Gas in der Form erzeugt werden, um die Dichte des Materials im geformten Gegenstand nach Belieben lokal zu verringern.

2. Verfahren nach Anspruch 1, wobei die besagte Auslassregelung dadurch erreicht wird, dass das Gas in Richtung einiger Bereiche des Materials geleitet wird.

3. Verfahren nach Anspruch 1 oder 2, wobei zur Entformung des geformten Gegenstandes ein unter Druck stehendes Fluid von außerhalb der Form durch eine Leitung (20) eingespritzt wird, die während der Materialbeschickung geschlossen bleibt.

4. Verfahren nach einem der vorhergehenden Ansprüche, wobei die Dichte des Materials im geformten Gegenstand lokal geregelt wird indem vor dem Formverfahren Materialmengen mit unterschiedlichen Dichten in die Form eingeführt werden.

5. Verfahren nach Anspruch 1, wobei Materialmengen mit unterschiedlichen Dichten nacheinander durch dieselbe Einführungsstelle in die Form eingeführt werden.

6. Verfahren nach Anspruch 5, wobei Materialmengen mit unterschiedlichen Dichten nacheinander durch zwei oder mehr Einführungsstellen in die Form eingeführt werden.

7. Verfahren nach einem der vorhergehenden Ansprüche, wobei vor dem Einbringen des Materials eine Harz tragende Schicht (62) in den Hohlraum (60) der Form eingelegt wird, die Schicht dazu gebracht wird, an den Innenwänden des Hohlraums (60) zu haften und dann die Form (50) erwärmt wird, um das Harz gelieren zu lassen.

8. Verfahren nach einem der vorhergehenden Ansprüche, wobei der geformte Gegenstand eine Polsterung oder ein Kissen oder Dämpfungselemente ist.

9. Verfahren nach einem der vorhergehenden Ansprüche, wobei das Material mittels einer peristaltischen Pumpe in die Form beschickt wird.

10. Verfahren nach einem der vorhergehenden Ansprüche, wobei das Material in Form von winzigen Kunststoffteilchen vorliegt.

## Revendications

1. Procédé de production d'objets par introduction de matière en poudre à chauffer et à solidifier dans un moule (10 ; 50), avec les étapes
de chauffer et refroidir le moule en faisant circuler du fluide sur la surface extérieure du moule, où
le moule est agité lors de son chargement et/ou lors du chauffage,
**caractérisé en ce que**
la densité du matériau dans l'objet moulé est contrôlée localement en contrôlant la sortie des flux de gaz libérée dans le moule, où
ledit contrôle est obtenu en créant des sorties pour le gaz dans le moule, de manière à réduire localement la densité du matériau dans l'objet moulé comme souhaité.

2. Procédé selon la revendication 1, où ledit contrôle de la sortie est accomplie en canalisant le gaz vers certaines zones du matériau.

3. Procédé selon la revendication 1 ou 2, où pour extraire l'objet moulé, un fluide sous pression est injecté depuis l'extérieur du moule à travers un conduit (20) qui reste fermé pendant le chargement du matériau.

4. Procédé selon l'une des revendications précédentes, où la densité du matériau dans l'objet moulé est contrôlée localement en insérant dans le moule, avant le moulage, des quantités de matière avec densités différentes.

5. Procédé selon la revendication 1, où des quantités de matériau avec densités différentes sont insérées en séquence dans le moule à travers le même point d'insertion.

6. Procédé selon la revendication 5, où des quantités de matériau avec densités différentes sont insérées en séquence dans le moule à travers deux ou plusieurs points d'insertion.

7. Procédé selon l'une des revendications précédentes, où, avant l'introduction du matériau, on place une couche (62) portant une résine à l'intérieur de la cavité (60) du moule, la couche adhère sur les parois intérieures de la cavité (60), puis le moule (50) est chauffé pour gélifier la résine.

8. Procédé selon l'une des revendications précédentes, où l'objet moulé est un rembourrage ou un roulement ou des éléments amortisseurs.

9. Procédé selon l'une des revendications précédentes, où le matériau est chargé dans le moule au moyen d'une pompe péristaltique.

10. Procédé selon l'une des revendications précédentes, où le matériau se présente sous la forme de minuscules particules plastiques.
